# DEMANDE DE BREVET EUROPEEN

(11) **EP 4 745 686 A1**
(43) Date de publication de la demande: **20.05.2026**
(21) Numéro de dépôt: 24212706.6
(22) Date de dépôt: 13.11.2024
(51) Int. Cl.: G04C 3/14, G04C 3/16, H02K 37/12, H02K 37/16, H02K 7/07, G04C 3/10

(54) **MOTEUR VIBRANT, NOTAMMENT POUR MOUVEMENT D'HORLOGERIE**

(71) Demandeur: The Swatch Group Research and Development Ltd, 2074 Marin (CH)
(72) Inventeur: PARATTE, Lionel, 2074 Marin-Epagnier (CH); BORN, Jean-Jacques, 1110 Morges (CH); BERTHOUD, Joerg, 2613 Villeret (CH)
(74) Mandataire: ICB SA

(57) **Abrégé**

L'invention se rapporte à un moteur (1) vibrant, notamment pour mouvement d'horlogerie, le moteur (1) comprenant un rotor (2) muni d'un aimant, un stator (3) muni d'au moins une bobine permettant l'actionnement de la rotation du rotor (2), le rotor (2) étant mobile en rotation par rapport au stator (3) par oscillation entre deux positions extrêmes, lorsqu'il est actionné par la bobine, et comprenant des moyens de rappel élastique du rotor (2) entre les positions extrêmes et une position intermédiaire de repos, lorsque le rotor (2) n'est plus actionné par la bobine, le moteur (1) fonctionnant par un mouvement oscillant rotatif du rotor (2) pour générer chaque pas.

## Description

### Domaine technique de l'invention

L'invention a trait au domaine des moteurs pas-à-pas, notamment pour l'horlogerie. L'invention concerne plus précisément un moteur vibrant ou oscillant.

### Arrière-plan technologique

Dans la plupart des mouvements électroniques d'horlogerie, l'énergie nécessaire à la rotation des aiguilles (par ex. des aiguilles des secondes, minutes et heures) est fournie par un moteur de type Lavet, dit « pas-à-pas ».

Ces moteurs monophasés ont un rotor, qui tourne par à-coup et opère un demi-tour par rapport au stator à chaque pas, pour définir chaque seconde. A chaque pas, le rotor entraîne des rouages du mouvement d'horlogerie, qui entraînent à leur tour les aiguilles. La cadence des pas est généralement déterminée par une base de temps à résonateur à quartz.

Pendant le fonctionnement du moteur, un couple de positionnement maintient le rotor dans des positions définies, et un couplage aimant-bobine permet de faire tourner le rotor entre ces positions. Cependant, le couplage étant une fonction sinusoïdale de la position du rotor, on observe une perte d'efficacité sur une partie du demi-tour.

De plus, le rotor est monté dans des paliers pour pourvoir tourner. Or, ce type d'assemblage engendre des frottements entre les pivots du rotor et les paliers. Ces frottements sont dus au poids du rotor, à l'attraction latérale de l'aimant du rotor, ainsi que par le contact entre les rouages du mouvement et le pignon du rotor lors l'entraînement des rouages par le rotor.

Ainsi, ces problèmes engendrent des pertes d'énergie, et donc une consommation accrue par rapport à ce qui est nécessaire pour un fonctionnement efficace du moteur.

### Résumé de l'invention

Le but de la présente invention est de pallier tout ou partie des inconvénients cités précédemment en proposant un moteur dont la consommation est réduite par rapport à un moteur Lavet.

A cet effet, l'invention se rapporte à un moteur vibrant, notamment pour mouvement d'horlogerie, le moteur comprenant un rotor muni d'un aimant, un stator muni d'au moins une bobine permettant l'actionnement de la rotation du rotor par pas, le rotor étant mobile en rotation par rapport au stator par oscillation entre deux positions angulaires extrêmes, lorsqu'il est actionné par la bobine.

L'invention est remarquable en ce que le moteur comprend des moyens de rappel élastique du rotor entre les positions extrêmes et une position intermédiaire de repos, lorsque le rotor n'est plus actionné par la bobine, le moteur fonctionnant par un mouvement oscillant rotatif du rotor pour générer chaque pas.

Le moteur fonctionne par un mouvement oscillant rotatif du rotor entre les deux positions extrêmes à sa fréquence de résonance pour générer chaque pas du moteur. Ainsi, le moteur effectue un va-et-vient, qui engendre une avance incrémentale du moteur.

Un tel moteur permet de réduire la course angulaire du rotor par rapport à un moteur Lavet monophasé, de sorte que le couplage électromagnétique entre l'aimant et les bobines est plus efficace, car il est situé autour du maximum de la fonction sinusoïdale du couplage.

En outre, le rotor est également guidé en rotation par les moyens de rappel élastiques susmentionnés à la place des paliers, de sorte qu'on évite les frottements entre l'arbre du rotor et les paliers qui le maintiennent.

Grâce à l'invention, on diminue les pertes d'énergie, de sorte qu'on diminue la consommation du moteur, par exemple de moitié sur certains moteurs.

Selon une forme de réalisation particulière de l'invention, les moyens de rappel élastiques comportent un guidage flexible agencé pour suspendre le rotor au stator.

Selon une forme de réalisation particulière de l'invention, le guidage flexible comprend une partie flexible supérieure reliant le dessus du rotor au-dessus du stator, et une partie flexible inférieure reliant le dessous du rotor au-dessous du stator.

Selon une forme de réalisation particulière de l'invention, la partie flexible supérieure et/ou la partie flexible inférieure du guidage flexible comprend au moins une paire de lames flexibles décroisées, de préférence deux paires de lames flexibles décroisées agencées en parallèle.

Selon une forme de réalisation particulière de l'invention, la partie flexible supérieure et/ou la partie flexible inférieure du guidage flexible comprend au moins lame flexible unique, de préférence deux lames flexibles unique agencées en parallèle.

Selon une forme de réalisation particulière de l'invention, le guidage flexible comprend un élément statique monté solidaire sur le stator, et un élément mobile monté solidaire sur le rotor, l'élément statique et l'élément mobile étant reliés par les lames flexibles du guidage flexible.

Selon une forme de réalisation particulière de l'invention, le guidage flexible comprend un anneau intermédiaire agencé autour de l'arbre de rotation du rotor, les deux paires de lames flexibles reliant l'anneau intermédiaire à l'élément mobile par une première paire de lames flexibles, et à l'élément statique par l'autre paire de lames flexibles.

Selon une forme de réalisation particulière de l'invention, les deux paires de lames flexibles sont agencées symétriquement de part et d'autre de l'anneau intermédiaire.

Selon une forme de réalisation particulière de l'invention, le guidage flexible comprend un anneau central agencé autour de l'arbre de rotation du rotor, les lames flexibles uniques reliant l'anneau central, à l'élément mobile par une première lame flexible unique, et à l'élément statique par l'autre lame flexible unique.

Selon une forme de réalisation particulière de l'invention, le moteur comporte un pignon d'engrènement pour engrener avec des rouages, notamment du mouvement d'horlogerie, le pignon d'engrènement étant monté pivotant au-dessus du rotor.

Selon une forme de réalisation particulière de l'invention, le moteur comprend une roue à cliquets antiretour, ainsi que des cliquets mobiles montés sur le rotor et des cliquets fixes montés sur le stator.

Selon une forme de réalisation particulière de l'invention, le pignon d'engrènement et la roue à cliquets sont solidaires du rotor dans un premier sens de rotation du rotor, et sont montés pivotant librement autour de l'arbre de rotation du rotor dans un deuxième sens de rotation du rotor.

Selon une forme de réalisation particulière de l'invention, lorsque le rotor vibre entre les deux positions extrêmes, la roue à cliquet est entraînée par les cliquets mobiles pour tourner avec le rotor par rapport au stator dans un sens, tandis que la roue à cliquets est retenue par les cliquets fixes, lorsque le rotor tourne dans le sens inverse, à chaque période d'oscillation du rotor.

Selon une forme de réalisation particulière de l'invention, l'angle total de rotation entre les positions extrêmes est inférieur à un demi-tour, de préférence inférieur à un quart de tour, voire inférieur à un huitième de tour, afin d'osciller autour du couple aimant-bobine maximum.

Selon une forme de réalisation particulière de l'invention, en position de repos, le vecteur d'aimantation de l'aimant est sensiblement dirigé perpendiculairement à l'axe principal du flux magnétique ϕ créé par la bobine, afin d'obtenir un couple aimant-bobine maximum.

Selon une forme de réalisation particulière de l'invention, le moteur est configuré pour vibrer à sa fréquence propre, notamment déterminée par l'inertie du rotor et desdits moyens de rappel élastiques, afin de minimiser la consommation électrique

L'invention se rapporte aussi à un mouvement d'horlogerie, comprenant un tel moteur vibrant.

### Brève description des figures

Les buts, avantages et caractéristiques de la présente invention apparaîtront à la lecture de plusieurs formes de réalisation données uniquement à titre d'exemples non limitatifs, en référence aux dessins annexés dans lesquels :
- la figure 1 représente schématiquement une vue partielle en perspective d'un moteur vibrant selon un premier mode de réalisation de l'invention, notamment pour un mouvement d'horlogerie,
- la figure 2 représente schématiquement une vue partielle de dessus du moteur vibrant de la figure 1,
- la figure 3 représente schématiquement une vue en coupe d'un moteur vibrant selon un deuxième mode de réalisation de l'invention,
- la figure 4 représente schématiquement une vue de dessus du moteur vibrant de la figure 3,
- les figures 5a) et 5b) représentent deux étapes du fonctionnement de la roue à cliquets,
- la figure 6 est un graphique représentant l'horaire du moteur vibrant selon l'invention, et
- la figure 7 représente schématiquement un aimant et une bobine du moteur selon l'invention, et
- la figure 8 est un graphique représentant le couple aimant-bobine en fonction de l'angle du rotor du moteur vibrant selon l'invention.

### Description détaillée de l'invention

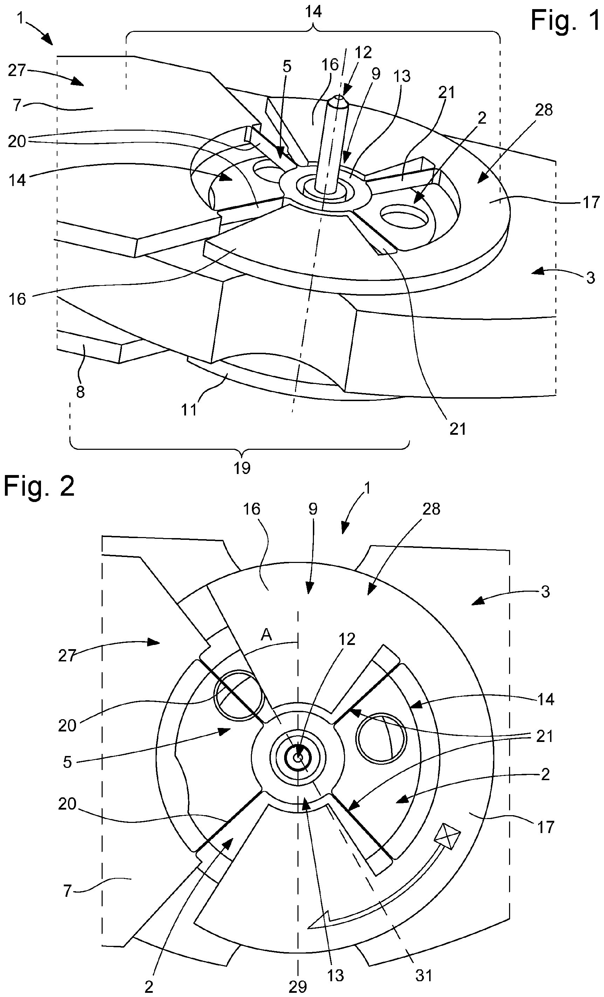

Les figures 1 et 2 montrent une représentation schématique d'un premier mode de réalisation d'un moteur vibrant 1 selon l'invention, avec un agencement en croix de lames flexibles du guidage flexible. Un tel moteur 1 est par exemple utilisé comme actionneur dans un mouvement d'horlogerie, en particulier pour entraîner des rouages qui actionnent à leur tour un dispositif d'affichage, par exemple à aiguilles.

Le moteur 1 comprend un rotor 2 et un stator 3, le rotor 2 étant monté mobile en rotation à l'intérieur d'un stator 3 immobile. Le rotor 2 est muni d'un aimant permanent, et comprend un corps en forme de cylindre, généralement un surmoulage plastique de l'aimant. Le stator 3 comprend un corps muni d'une ouverture traversante circulaire, permettant d'y disposer le rotor 2. Le stator 3 est muni d'une ou plusieurs bobines permettant l'actionnement de la rotation du rotor 2.

Le rotor 2 comprend, d'une part, un arbre axial 12 s'étendant au-dessus du corps cylindrique, à partir de disques axiaux agencés au-dessus et en-dessous du cylindre du rotor 2.

Le moteur 1 comporte en outre un pignon d'engrènement 15 monté sur le rotor 2. Le pignon d'engrènement 15 est solidaire en rotation du rotor 2, notamment dans un premier sens de rotation du rotor 2, mais il peut aussi pivoter librement autour de l'arbre axial 12 du rotor 2 au-dessus du corps cylindrique, en particulier dans un deuxième sens de rotation du rotor 2.

Un tel pignon d'engrènement 15 permet par exemple d'engrener avec des rouages d'un mouvement d'horlogerie, non représentés sur les figures.

Le pignon d'engrènement 15 est mobile en rotation par rapport au stator 3 dans un premier sens, lorsque le rotor 2 vibre entre les deux positions extrêmes, lorsqu'il est actionné par les bobines.

Ainsi, le moteur 1 fonctionne par un mouvement oscillant rotatif du rotor 2 entre les deux positions extrêmes pour générer chaque pas du moteur 1.

A cette fin, selon l'invention, le moteur 1 comprend des moyens de rappel élastique du rotor 2 des positions extrêmes à une position de repos, lorsque le rotor 2 n'est plus actionné par les bobines. De préférence, la position de repos est agencée à mi-chemin entre les positions extrêmes.

Les moyens de rappel comportent un guidage flexible 5 agencé pour suspendre et guider en rotation le rotor 2, ainsi que pour exercer une force de rappel du rotor 2 en position de repos.

Le guidage flexible 5 comprend un élément statique 27 monté solidaire sur le stator 3, et un élément mobile 28 monté solidaire sur le rotor 2, l'élément statique 27 et l'élément mobile 28 étant reliés par les moyens de rappel élastique.

L'élément statique 27 comprend ici deux plaques 7, 8 montées superposées sur le stator 3, une première plaque 7 étant au-dessus du stator 3, et la deuxième plaque 8 étant disposée en-dessous du stator 3.

Dans un premier mode de réalisation, dit en croix, représenté sur les figures 1 et 2, l'élément mobile comprend deux portions de disques 9, 11 en partie ouverts, une portion 9 étant superposée au-dessus du rotor 2, et l'autre portion 11 étant agencée en-dessous du rotor 2. Chaque portion de disque 9, 11 comprend deux ailettes intérieures 16, reliées au rotor 2, et jointes entre-elles par une section d'anneau 17.

Le guidage flexible 5 comprend une partie flexible supérieure 14 reliant le dessus du rotor 2 au-dessus du stator 3, et une partie flexible inférieure 19 reliant le dessous du rotor 2 au-dessous du stator 3.

De préférence, la partie flexible supérieure 14 et la partie flexible inférieure 19 sont sensiblement identiques.

La partie flexible supérieure 14 et/ou la partie flexible inférieure 19 comprend au moins une paire de lames flexibles décroisées 20, de préférence deux paires de lames flexibles décroisées 20, 21, qui sont agencées au-dessus du rotor 2.

Les deux paires de lames flexibles 20, 21 sont reliées par un anneau intermédiaire 13 agencé autour de l'arbre 12 du rotor 2, les deux paires de lames flexibles 20, 21 étant agencées symétriquement de part et d'autre de l'anneau intermédiaire 13. Ainsi, la première paire de lames flexibles 20 relie l'anneau intermédiaire 13 à l'élément statique, ici la plaque supérieure 7 ou inférieure 8, et la deuxième paire de lames flexibles 21 relie l'anneau intermédiaire 13 à l'élément mobile, ici la portion de disque 9.

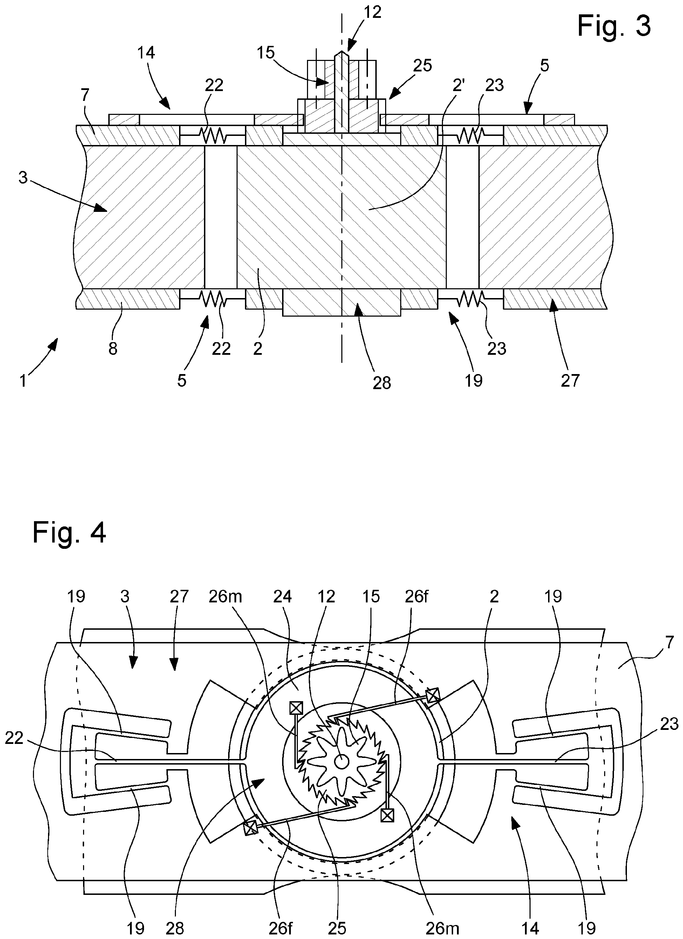

Les figures 3 et 4 montrent un deuxième mode de réalisation du moteur 1 selon l'invention, avec un autre agencement, dit en ligne, des lames flexibles du guidage flexible 5. Aucune différence fonctionnelle n'est faite entre ces modes de réalisation, car ils permettent tous deux un guidage en rotation du rotor 2.

La partie flexible supérieure 14 et/ou la partie flexible inférieure 19 du guidage flexible 5 comprend au moins deux lames flexibles 22, 23 agencées en parallèle. Les deux lames flexibles 22, 23 sont agencées symétriquement sur le rotor 2, et relient chacune, d'une part un anneau central 24 monté concentriquement sur ou sous le rotor 2, et d'autre part, la plaque supérieure 7 ou inférieure 8 de l'élément statique 27 par deux paires de lames flexibles 19.

Les deux lames flexibles 22, 23 sont sensiblement colinéaires en position de repos du rotor 2.

Ainsi, dans les deux modes de réalisation, le guidage flexible 5 ramène le rotor 2 des positions extrêmes vers la position de repos, lorsque le rotor 2 n'est plus actionné par la ou les bobines.

Les lames flexibles du guidage flexible 5 sont sensiblement rectilignes, lorsque le rotor 2 est en position de repos du guidage flexible 5. Tandis qu'en position d'actionnement, les lames du guidage flexible 5 sont courbes, car mises sous contraintes par la position du rotor 2 par rapport au stator 3.

De préférence, on choisit une course angulaire inférieure à un demi-tour du rotor 2, voire inférieure à un quart de tour ou un huitième de tour, pour garantir l'efficacité du couplage aimant-bobine, comme cela est décrit plus loin.

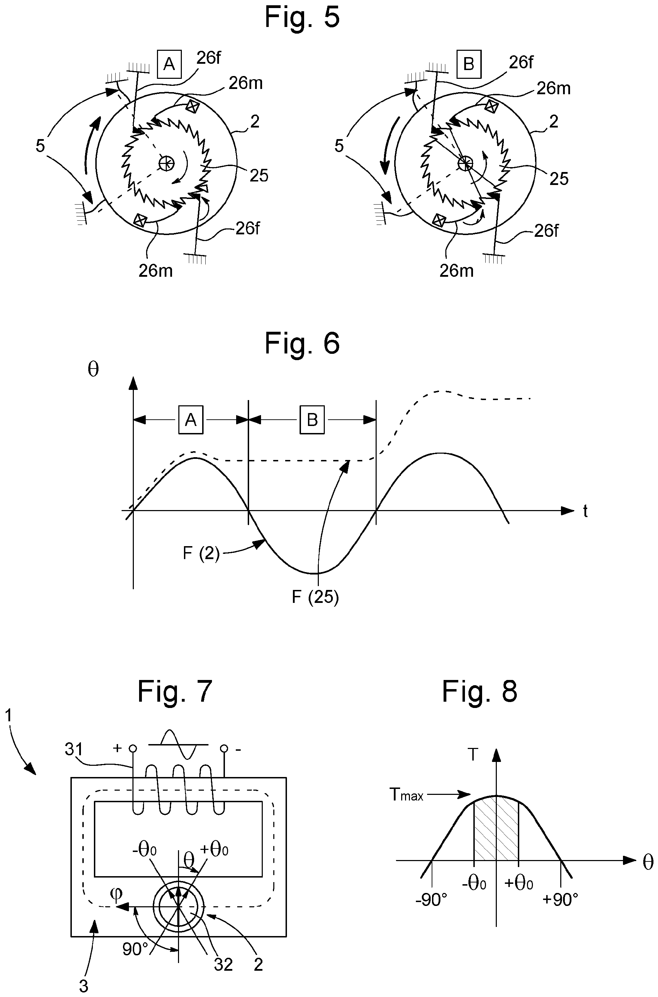

Sur les figures 4 et 5, le moteur 1 comprend aussi une roue à cliquets antiretour 25 solidaire du pignon d'engrènement 15, de manière à retenir le pignon d'engrènement 15 dans le deuxième sens de rotation du rotor. De préférence, la roue à cliquets 25 est uniquement située sur la partie flexible supérieure 14 du moteur.

Des cliquets fixes 26f, ici deux, sont agencés sur la partie flexible supérieure 14 et sont solidaires du stator 3, et sont en particulier montés sur la plaque supérieure 8 du stator 3. Grâce aux cliquets fixes 26f, la roue antiretour 25 est bloquée dans un sens.

Des cliquets mobiles 26m sont montés sur le rotor 2 pour tourner avec celui-ci.

Le pignon d'engrènement 15 et la roue à cliquets 25 sont solidaires du rotor 2 dans le premier sens de rotation du rotor 2, et sont montés pivotant autour de l'arbre de rotation 12 du rotor 2, dans le deuxième sens de rotation du rotor 2.

Le fonctionnement du moteur 1, en particulier de la roue à cliquets 25, est illustré sur la figure 5. Lorsque le rotor 2 vibre, il effectue des allers-retours selon une fonction sinusoïdale du temps.

Lors du mouvement aller A dans le premier sens, la roue à cliquet 25 et donc le pignon d'engrènement 15 tournent avec le rotor 2 par rapport au stator 3, entrainés par les cliquets mobiles 26m, tandis que les cliquets fixes 26f sont réarmés par la rotation de la roue à cliquets 25. Ainsi, la roue à cliquets 25 a effectué un pas.

Lors du mouvement retour B dans le deuxième sens inverse, la roue à cliquets 25 est retenue par ses cliquets fixes 26f, alors que les cliquets mobiles 26m sont réarmés à cause du maintien de la roue à cliquets 25. Lors du retour, la roue à cliquet 25 reste donc immobile. Ainsi, la roue à cliquet 25 effectue un pas dentaire à chaque période d'oscillation du rotor 2.

Le pignon d'engrènement 15 suit le mouvement de la roue à cliquets 25. Ainsi, il effectue une rotation par pas dans le même sens.

Sur le graphique de la figure 6, la première fonction F(2) montre l'oscillation θ du rotor 2 en fonction du temps. La deuxième fonction F(25) montre la rotation de la roue à cliquets 25 en fonction du temps. Grâce aux cliquets 26, la roue à cliquets 25 continue de tourner dans le même sens, malgré le retour du rotor 2. Ainsi, la fonction F(25) augmente d'un étage à chaque oscillation du rotor 2 dans un sens.

La figure 7 montre plus largement le moteur 1. Le stator 3 a une forme d'anneau sensiblement carré, dont un côté comprend un logement pour le rotor 2, et il comprend une bobine 31 enroulée au moins en partie autour d'un autre côté du stator 3. Le rotor 2 est agencé dans le logement et comprend un aimant 32.

Lorsque la bobine 31 est actionnée, le rotor 2 effectue une oscillation entre deux positions extrêmes d'angles -θ₀ et +θ₀, autour de l'angle 0°, qui correspond à la position de repos.

Le couple du moteur 1 en fonction de l'angle de rotation θ est illustré à la figure 6. Lorsque le rotor 2 se trouve en position de repos (θ=0), le vecteur d'aimantation de l'aimant 2 est sensiblement dirigé perpendiculairement à l'axe principal du flux magnétique ϕ créé par la bobine 31 dans le stator 3. Lorsque le moteur 1 est alimenté par une tension alternative, le rotor 2 vibre entre les deux positions extrêmes - θ₀ et +θ₀.

Cette couverture angulaire couvre idéalement un angle total inférieur à un demi-tour, de préférence un quart de tour, voire un huitième de tour. Ainsi, les positions extrêmes sont proches du maximum du couple aimant-bobine, de sorte que le rendement électromécanique est élevé avec un tel moteur 1.

De préférence, le moteur 1 est configuré pour vibrer à sa fréquence propre afin de minimiser la consommation électrique. Sa fréquence propre est déterminée par l'inertie du rotor 2 et desdits moyens de rappel élastiques.

Naturellement, l'invention n'est pas limitée aux modes de réalisation de moteurs vibrants décrits en référence aux figures, et des variantes pourraient être envisagées sans sortir du cadre de l'invention.

## Revendications

1. Moteur (1) vibrant, notamment pour mouvement d'horlogerie, le moteur (1) comprenant un rotor (2) muni d'un aimant (32), un stator (3) muni d'au moins une bobine (31) permettant l'actionnement de la rotation du rotor (2), le rotor (2) étant mobile en rotation par rapport au stator (3) par oscillation entre deux positions extrêmes, lorsqu'il est actionné par la bobine (31), **caractérisé en ce qu'**il comprend des moyens de rappel élastique du rotor entre les positions extrêmes et une position intermédiaire de repos, lorsque le rotor (2) n'est plus actionné par la bobine (31), le moteur (1) fonctionnant par un mouvement oscillant rotatif du rotor (2) pour générer chaque pas.

2. Moteur selon la revendication 1, **caractérisé en ce que** les moyens de rappel élastique comportent un guidage flexible (5) agencé pour suspendre le rotor (2) au stator (3).

3. Moteur selon la revendication 2, **caractérisé en ce que** le guidage flexible (5) comprend une partie flexible supérieure (14) reliant le dessus du rotor (2) au-dessus du stator (3), et une partie flexible inférieure (19) reliant le dessous du rotor (2) au-dessous du stator (3).

4. Moteur selon la revendication 3, **caractérisé en ce que** la partie flexible supérieure (14) et/ou la partie flexible inférieure (19) du guidage flexible (5) comprend au moins une paire de lames flexibles décroisées (20), de préférence deux paires de lames flexibles décroisées (20, 21) agencées en série.

5. Moteur selon la revendication 2, **caractérisé en ce que** la partie flexible supérieure (14) et/ou la partie flexible inférieure (19) du guidage flexible (5) comprend au moins une lame flexible unique (22), de préférence deux lames flexibles uniques (22, 23) agencées de part et d'autre d'un anneau, de préférence colinéairement.

6. Moteur selon la revendication 4 ou 5, **caractérisé en ce que** le guidage flexible (5) comprend un élément statique (27) monté solidaire sur le stator (3), et un élément mobile (28) monté solidaire sur le rotor (2), l'élément statique (27) et l'élément mobile (28) étant reliés par les lames flexibles du guidage flexible (5).

7. Moteur selon les revendications 4 et 6, **caractérisé en ce que** le guidage flexible (5) comprend un anneau intermédiaire (13) agencé autour de l'arbre de rotation (12) du rotor (2), les deux paires de lames flexibles (20, 21) reliant l'anneau intermédiaire (13) à l'élément mobile (28) par une première paire de lames flexibles (20), et à l'élément statique (27) par l'autre paire de lames flexibles (21).

8. Moteur selon la revendication 7, **caractérisé en ce que** les deux paires de lames flexibles (20, 21) sont agencées symétriquement de part et d'autre de l'anneau intermédiaire (13).

9. Moteur selon les revendications 5 et 6, **caractérisé en ce que** le guidage flexible (5) comprend un anneau central (24) agencé autour de l'arbre de rotation du rotor (2), les lames flexibles uniques reliant l'anneau central (24) à l'élément mobile par une première lame flexible unique (20), et à l'élément statique (27) par l'autre lame flexible unique.

10. Moteur selon l'une, quelconque, des revendications précédentes, **caractérisé en ce que** le moteur (1) comporte un pignon d'engrènement (15) pour engrener avec des rouages, notamment du mouvement d'horlogerie, le pignon d'engrènement (15) étant monté pivotant au-dessus du rotor (2).

11. Moteur selon la revendication 10, **caractérisé en ce qu'**il comprend une roue à cliquets antiretour (25), la roue (25) étant solidaire du pignon d'engrènement (15), ainsi que des cliquets mobiles (26m) montés sur le rotor (2) et des cliquets fixes (26f) montés sur le stator (2).

12. Moteur selon les revendications 10 et 11, **caractérisé en ce que** le pignon d'engrènement (15) et la roue à cliquets (25) sont solidaires du rotor (2) dans un premier sens de rotation du rotor (2), et sont montés pivotant librement autour de l'arbre de rotation (12) du rotor (2) dans un deuxième sens de rotation du rotor (2).

13. Moteur selon la revendication 12, **caractérisé en ce que**, lorsque le rotor (2) vibre entre deux positions extrêmes, la roue à cliquet (25) est entraînée par les cliquets mobiles (26m) pour tourner avec le rotor (2) par rapport au stator (3) dans un sens, tandis que la roue à cliquets (25) est retenue par les cliquets fixes (26f), lorsque le rotor (2) tourne dans le sens inverse, à chaque période d'oscillation du rotor (2).

14. Moteur selon l'une, quelconque, des revendications précédentes, **caractérisé en ce que** l'angle total de rotation entre les positions extrêmes est inférieur à un demi-tour, de préférence inférieur à un quart de tour, voire inférieur à un huitième de tour, afin d'osciller autour du couple aimant-bobine maximum.

15. Moteur selon l'une, quelconque, des revendications précédentes, **caractérisé en ce que**, en position de repos, le vecteur d'aimantation de l'aimant (32) est sensiblement dirigé perpendiculairement à l'axe principal du flux magnétique ϕ créé par la bobine (31), afin d'obtenir un couple aimant-bobine maximum.

16. Moteur selon l'une, quelconque, des revendications précédentes, **caractérisé en ce qu'**il est configuré pour vibrer à sa fréquence propre, notamment déterminée par l'inertie du rotor (2) et desdits moyens de rappel élastiques, afin de minimiser la consommation électrique.

17. Mouvement d'horlogerie, **caractérisé en ce qu'**il comprend un moteur (1) vibrant selon l'une, quelconque, des revendications précédentes.
